# EUROPÄISCHE PATENTSCHRIFT

(11) **EP 0 530 932 B1**
(45) Veröffentlichungstag und Bekanntmachung des Hinweises auf die Patenterteilung: **12.06.1996**
(21) Anmeldenummer: 92250224.0
(22) Anmeldetag: 25.08.1992
(51) Int. Cl.: F27D 1/16, F27B 14/10, H05B 7/06

(54) **Metallurgisches Gefäss für eine Gleichstromlichtbogeneinrichtung**
Metallurgical container for a DC arc installation
Récipient métallurgique pour une installation à arc à courant continu

(30) Priorität: 04.09.1991 DE 4129756
(43) Veröffentlichungstag der Anmeldung: 10.03.1993
(73) Patentinhaber: MANNESMANN Aktiengesellschaft, D-40027 Düsseldorf (DE)
(72) Erfinder: Hofmann, Werner, W-4130 Moers (DE); Block, Franz-Rudolf, W-5106 Roetgen (DE)
(74) Vertreter: Meissner, Peter E., Dipl.-Ing.

(56) Entgegenhaltungen:
- EP-A- 0 124 490
- EP-A- 0 422 406
- EP-A- 0 473 809
- DE-C- 252 528
- GB-A- 2 072 470

## Beschreibung

Die Erfindung betrifft ein Verfahren zur Herstellung einer Feuerfestauskleidung eines metallurgischen Gefäßes, bei dem im Bereich des Gefäßbodens eine Anode eines Gleichstromlichtbogenofens vorgesehen ist sowie ein metallurgisches Gefäß, das eine Feuerfestauskleidung mit einer Anode aufweist, die nach diesem Verfahren hergestellt ist.

Es zeigt sich, daß nach dem Fortschritt in der Entwicklung von Halbleiterbauelementen ein immer stärkerer Trend zu Gleichstromlichtbogenöfen bei der Stahlerschmelzung bzw. -erwärmung erkennbar ist. Üblicherweise wird der Lichtbogen zwischen einer in das Gefäß hineinragenden oberhalb der Schmelze angeordneten Kathode und dem Schmelzgut selber ausgebildet. Die Rückleitung des Gleichstromes wird von einer oder mehreren im Bereich des Gefäßbodens angeordneten Anode (n) durchgeführt.

Da diese Anoden einer anhaltend hohen thermischen Beanspruchung unterliegen, wird als Anodenmaterial regelmäßig Graphit eingesetzt.

Diese Graphitelektroden weisen zwar einen hohen Erweichungs- und Schmelzpunkt auf, sind aber mit dem Nachteil behaftet, daß der Graphit im Kontakt mit der kohlenstoffarmen Stahlqualität sich in dieser auf löst. Dies führt nicht nur zu einem hohen Verschleiß der gleichzeitig als schützende Auskleidung dienenden Anode, sondern es führt auch zu einer unzulässigen Aufkohlung der Stahlschmelze. Gleiches gilt für Anoden aus Graphitmagnesitmassen, wenngleich bei diesen Anoden die Aufkohlung der Stahlschmelze reduziert werden konnte.

Bei Gleichstromlichtbogenöfen kommen auch metallische Elektroden zum Einsatz. Metallische Elektroden scheiden aber beim Einsatz in Pfannenöfen aus, da die metallischen Elektroden intensiv gekühlt werden müssen und ein Aufschmelzen der Elektrode bis hin zum Schmelzdurchbruch alleine aus arbeitssicherheitstechnischen Gründen zu vermeiden sind. Die Kühlung solcher metallischer Elektroden muß während der gesamten Zeit, in der sich die Schmelze in der Pfanne befindet, aufrechterhalten werden. Dies führt zu hohem Aufwand zur Aufrechterhaltung der Kühlmedienzufuhr während des Transportes, wobei der Transport durchaus längere Wege zwischen dem Schmelzofen und dem Konverter bzw. dem Pfannenofenstand zu überbrücken hat oder zu konstruktiv aufwendigen Elektroden, wie in EP 0 167 037 B1.

Aus der EP 00 124 490 A1 ist eine Gleichstromanode bekannt, die ein vorgefertigtes, abnehmbares, elektrisch leitfähiges Element umfaßt, das sich mit dem Metallbad in Kontakt befindet. Das Element steht dabei mit elektrisch leitfähigem körnigen Material in Verbindung, das auf einer einen Metallstab aufweisenden Metallplatte aufliegt. Das vorgefertigte Element kann auch einem feuerfesten Gußteil bestehen, das mit zwischengelegten Metallstäben durchsetzt ist.

Diese aus dieser Schrift bekannte Anode ist konstruktiv und werkstoffmäßig anders gestaltet als der übrige Boden des Gleichstromlichtbogenofens. Darüber hinaus haben die in das feuerfeste Gußteil eingebetteten Metallstäbe unmittelbaren Kontakt mit der Schmelze.

Aus der DE-OS 27 53 198 ist eine Elektrode eines Generators bei der magnetohydrodynamischen Leistungserzeugung bekannt, die eine Feuerfestkeramikmatrix aufweist, welche 10 bis 15 Volumenprozent einer kontinuierlichen Metallverstärkung enthält. Die Oberfläche dieser Elektrode kann aus nicht verstärkter, feuerfester Keramikmatrix bestehen. Am Einsatzort ist ein Plasma, welches ein ionisiertes oder inertes Gas sein kann, bei Temperaturen bis zu 2.800 Grad Celsius anzutreffen, was zu Elektroden-Plasma-Temperaturen bis zu 2.100 Grad Celsius führt.

Diese alleinstehende Elektrode, die von einem Gas umströmt wird, befindet sich in einer mit einem Schmelzgefäß für metallische Werkstoffe nicht vergleichbaren Umgebung.

Die vorliegende Erfindung hat zum Ziel, eine Anode für ein gleichstrombeheiztes Gefäß zu schaffen, die bei hoher elektrischer Leitfähigkeit beim Verzehr eine Verunreinigung und/oder eine Aufkohlung der Schmelze vermeidet, keine gesonderte Kühlmedienversorgung erfordert, eine hohe Verfügbarkeit aufweist und einfach, schnell und kostengünstig instandzuhalten ist.

Die Erfindung löst dieses Problem mit den kennzeichnenden Merkmalen der Ansprüche 1 und 2.

In einfacher Weise wird während des Auskleidens des metallurgischen Gefäßes die Anode in die Feuerfestauskleidung integriert. Es entsteht eine Auskleidung eines metallurgischen Gefäßes, deren Verschleißschicht aus einheitlichem Material besteht. Die Anode selbst ist somit in geschützter Position und weder der chemischen, der thermischen, noch der erosiven Belastung direkt ausgesetzt. Die metallischen Teile der erfindungsgemäßen Anode befinden sich unter einer Feuerfestschicht, die ohne Graphitanteil auskommt. Hierdurch wird ein Aufkohlen der Schmelze vermieden. Die Erfindung setzt stattdessen solche keramische Stoffe ein, deren spezifischer elektrischer Widerstand bei hohen Temperaturen sinkt.

Die ersten metallischen Anteile der in der Feuerfestmasse angeordneten Anode sind in einer Tiefe angeordnet, bis zu der üblicherweise ein Verschleiß zugelassen wird. Anschließend wird die Anode mit einfachen Mitteln wieder mit Feuerfestmaterial aufgefüllt. Sollte der Verschleiß Anodenteile mit umfassen, die bereits metallische Anteile aufweisen, so können diese beim üblichen Flicken der Auskleidung bei Bedarf nach Entleeren des Gefäßes wieder ersetzt werden. Insgesamt ist hierdurch eine hohe Verfügbarkeit der Gefäße bzw. Pfannen sichergestellt.

Ein Beispiel der Erfindung ist in der folgenden Zeichnung dargelegt. Es zeigen:
- Fig. 1: einen Schnitt durch das Ofengefäß,
- Fig. 2: eine Anode mit Stromzuführstab,
- Fig. 3: eine Anode mit Stromzuführseil.

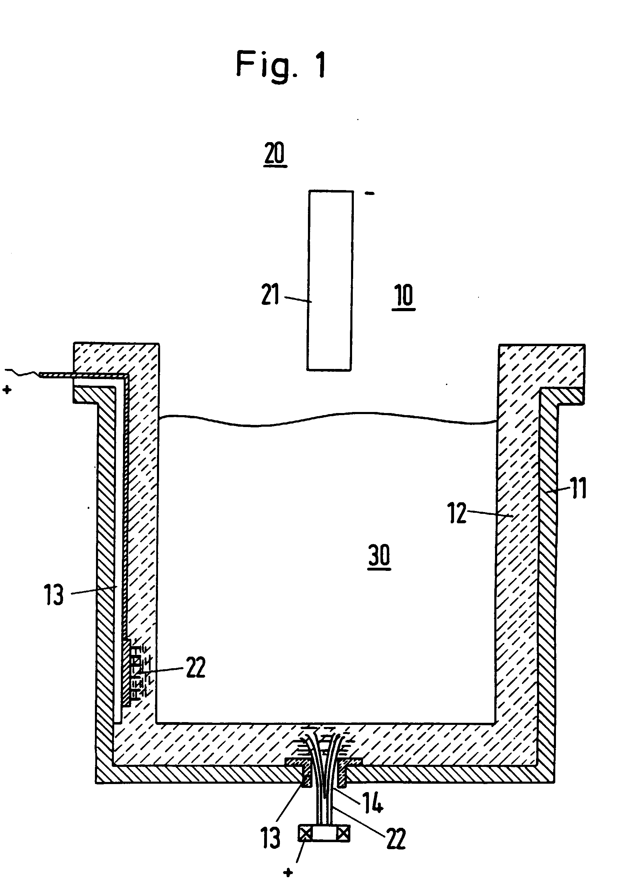

Die Fig. 1 zeigt in schematischer Darstellung einen Pfannenofen mit einem Gefäß 10 und einer Gleichstromlichtbogeneinrichtung 20. In dem Gefäß 10 befindet sich eine metallische Schmelze 30.

Das Gefäß 10 des Pfannenofens weist einen Metallmantel 11 auf, an dem eine Feuerfestauskleidung 12 vorgesehen ist. In der Feuerfestauskleidung 12 befindet sich mindestens eine Badelektrode, die Anode 22.

Beheizt wird der Pfannenofen mittels elektrischen Stromes, der von der über dem Schmelzbad 30 befindlichen Kathode 21 über einen Lichtbogen in das Schmelzbad 30 und durch die das Bad kontaktierende Anode 22 geleitet wird.

In der Fig. 1 ist im Boden des Gefäßes 10 eine Anode 22 dargestellt, die unmittelbar durch eine Öffnung 14 des Gefäßes und durch eine Isolierung 13 vom Metallmantel 11 elektrisch isoliert, unmittelbar aus dem Pfannenofen herausgeführt wird.

Im linken Bereich der Fig. 1 ist eine weitere Anode 22 dargestellt, die in der Seitenwand der Feuerfestauskleidung 12 angeordnet ist. Zwischen der Anode 22 und seiner Stromzuführleitung, die parallel zum Metallmantel 11 über die Mündung des Gefäßes 10 nach außen geführt ist, ist eine Isolierung 13 vorgesehen.

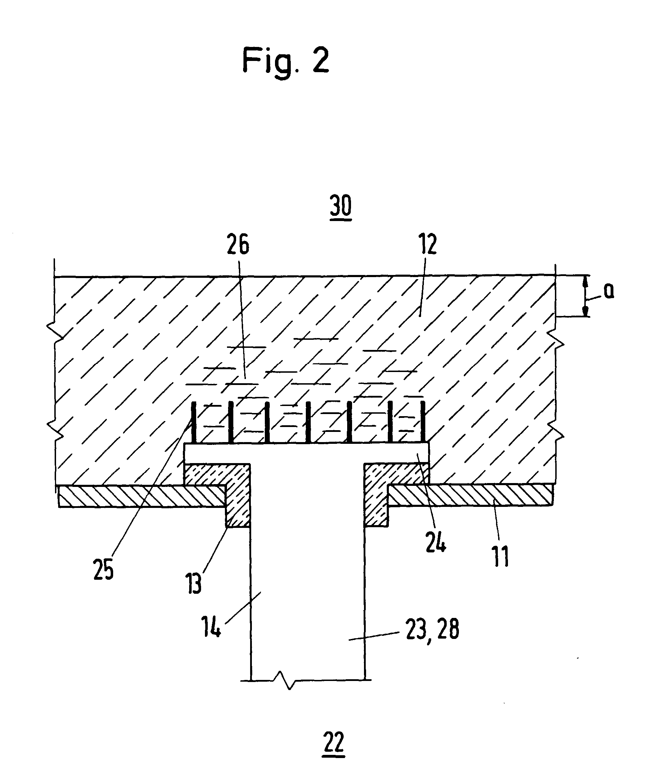

In der Fig. 2 ist eine Anode 22 dargestellt, die einen stielförmigen Teil 23 aufweist, der durch die Öffnung 14 und dabei geschützt durch die Isolierung 13 durch den Metallmantel 11 geführt ist. Der stielförmige Teil 23 ist als Stab 28 ausgebildet, der kopfendig eine Platte 24 besitzt. Die Platte 24 ragt in die Feuerfestauskleidung 12 hinein.

Auf der dem Stab 28 abgewandten Seite der Platte 24 sind Borsten 25 angebracht. In der Feuerfestauskleidung 12 im Bereich der Borsten 25 und über die Kopfenden der Borsten in Richtung Schmelze 30 weisend, ist eine metallische Einlagerung 26 vorgesehen. Diese metallische Einlagerung 26 ist mindestens um den Abstand a zum Rand der Feuerfestauskleidung 12 beabstandet, wobei a den üblichen Verschleißbereich der Feuerfestmasse berücksichtigt. Im schmelzseitigen Bereich kann der metallische Anteil geringer sein, da aufgrund der hohen Temperaturen die feuerfeste Ausmauerung eine ausreichend hohe elektrische Leitfähigkeit besitzt. In der Feuerfestmasse 12 zum Metallmantel 11 des Gefäßes 10 hin ist bei abnehmender Temperatur ein zunehmender metallischer Anteil zugemischt, um die notwendige Leitfähigkeit zu gewährleisten.

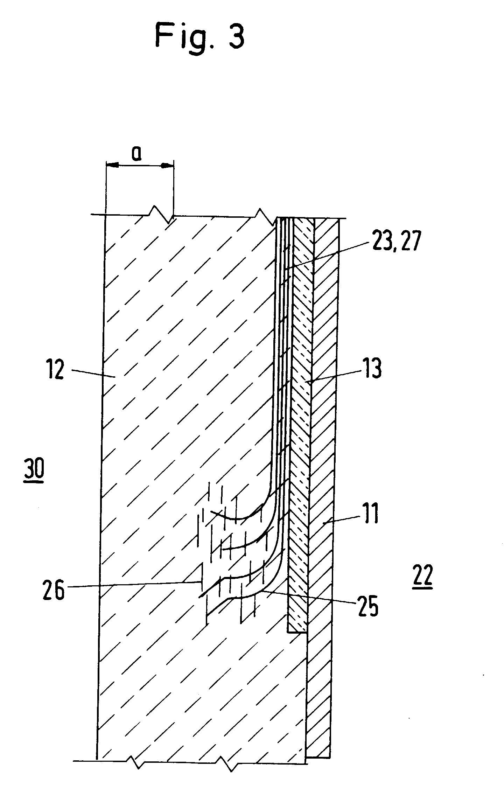

Die Fig. 3 zeigt eine Anode 22, deren stielförmiger Teil 23 als Seil 27 ausgebildet ist. Das Seil 27 ist dabei durch die Feuerfestauskleidung 12 geführt und durch die Isolierung 13 vom Metallmantel 11 elektrisch isoliert.

Das Seil 27 ist kopfendig entflochten, wobei die Borsten 25, in der Feuerfestauskleidung 12 eingelagert, in Richtung der Schmelze 30 weisen.

In der Feuerfestauskleidung 12 ist im Bereich, wie bereits in Fig. 2 dargestellt, der Borsten 25 eine metallische Einlagerung 26 vorgesehen. Diese Einlagerung 26 reicht nicht näher an den Rand der Feuerfestauskleidung 12 heran als der mit a bezeichnete Verschleißbereich ausmacht.

## Patentansprüche

1. Verfahren zur Herstellung einer Feuerfestauskleidung eines metallurgischen Gefäßes, bei dem im Bereich des Gefäßbodens eine Anode einer Gleichstromlichtbogeneinrichtung vorgesehen ist,
dadurch gekennzeichnet,
daß in das von Feuerfestmaterial freie Ofengefäß an vorbestimmter Stelle ein metallisches besenartiges Element eingebracht wird, dessen Borsten zum Gefäßinneren gerichtet sind,
daß anschließend mindestens im Bereich des besenartigen Elementes Feuerfesttorkret aufgebracht wird, der eine metallische Masse während des Torkretierens zugemengt wird, und
daß bei zunehmender Torkretdicke der Anteil der metallischen Masse zur Feuerfestmasse reduziert wird und im Bereich des Pfanneninnenrandes ausschließlich torkretgespritzt wird.

2. Metallurgisches Gefäß für eine Gleichstromlichtbogeneinrichtung, die eine in das Gefäß hineinragende Kathode und mindestens eine in der Feuerfestauskleidung des Gefäßes angeordnete nach dem Verfahren des Anspruchs 1 hergestellte Anode aufweist,
dadurch gekennzeichnet,
daß in der Feuerfestauskleidung (12) an der dem Gefäßmantel (11) zugeordneten Seite ein metallisches besenartiges Element (22) angeordnet ist, dessen stielförmiger Teil (23) an den positiven Pol der elektrischen Energieanlage angeschlossen ist und dessen Borsten (25) zum Gefäßinnenraum weisend in der Feuerfestauskleidung (11) eingebettet sind, wobei die Feuerfestauskleidung (11) eine metallische Einlagerung (26) aufweist, dessen Volumenanteil Metall zu Feuerfestmaterial in dem dem Gefäßinnenraum zugewandten Teil kleiner ist.

3. Metallurgisches Gefäß nach Anspruch 2,
dadurch gekennzeichnet,
daß das Gewichtsverhältnis von Metall (26) zu Feuerfestmaterial (12) im Mittel 20 bis 80 % beträgt.

4. Metallurgisches Gefäß nach Anspruch 2,
dadurch gekennzeichnet,
daß der stielförmige Teil (23) des metallischen Elementes (22) aus Drähten (25) besteht, die zu einem Seil (27) gedreht sind.

5. Metallurgisches Gefäß nach Anspruch 2,
dadurch gekennzeichnet,
daß der stielförmige Teil (23) des metallischen Elementes (22) ein Metallstab (28) ist, der an einer Metallplatte (24) befestigt ist, an der die metallischen Borsten (25) angebracht sind.

6. Metallurgisches Gefäß nach den Ansprüchen 4 oder 5,
dadurch gekennzeichnet,
daß der stielförmige Teil (Seil 27 bzw. Stab 28) durch eine Öffnung (14) in dem Metallmantel (11) aus dem Gefäß (10) herausgeführt wird.

7. Metallurgisches Gefäß nach Anspruch 6,
dadurch gekennzeichnet,
daß an der Öffnung (14) eine den elektrischen Strom nicht leitende Isolierung (13) vorgesehen ist.

8. Metallurgisches Gefäß nach den Ansprüchen 4 oder 5,
dadurch gekennzeichnet,
daß der stielförmige Teil (Seil 27 bzw. Stab 28) im Inneren des metallischen Gefäßes (10) zwischen der Feuerfestauskleidung (12) und dem Metallmantel (11) zur Gefäßmündung geführt wird.

9. Metallurgisches Gefäß nach Anspruch 8,
dadurch gekennzeichnet,
daß zwischen dem stielförmigen Teil (Seil (27 bzw. Stab 28) und dem Metallmantel (11) eine den elektrischen Strom nicht leitende Isolierung (13) vorgesehen ist.

10. Metallurgisches Gefäß nach Anspruch 2,
dadurch gekennzeichnet,
daß als metallische Einlagerung (26) Metallspäne vorgesehen sind.

11. Metallurgisches Gefäß nach Anspruch 2,
dadurch gekennzeichnet,
daß als metallische Einlagerung (26) Metallpulver vorgesehen ist.

## Claims

1. A method for the production of a refractory lining for a metallurgical vessel, in which an anode of a d.c. arc apparatus is provided in the region of the bottom of the vessel, characterised in that
a metallic, broom-like element is introduced into the furnace vessel, which is free of refractory material, at a predetermined point, the bristles of which element are directed towards the interior of the vessel,
that then refractory torcrete is applied at least in the region of the broom-like element, to which torcrete a metallic substance is admixed during torcreting, and that with increasing torcrete thickness the content of the metallic substance relative to the refractory compound is reduced and exclusively torcrete is sprayed in the region of the inner edge of the ladle.

2. A metallurgical vessel for a d.c. arc apparatus, which has a cathode which projects into the vessel and at least one anode produced in accordance with the method of Claim 1 which is arranged in the refractory lining of the vessel,
characterised in that
a metallic broom-like element (22) is arranged in the refractory lining (12) on the side associated with the vessel casing (11), the stem-shaped part (23) of which element is connected to the positive pole of the electric power plant and the bristles (25) of which are embedded in the refractory lining (11), pointing towards the interior of the vessel, the refractory lining (11) having a metallic insertion (26) the proportion by volume of metal to refractory material of which is less in the part facing the interior of the vessel.

3. A metallurgical vessel according to Claim 2, characterised in that the weight ratio of metal (26) to refractory material (12) is on average 20 to 80%.

4. A metallurgical vessel according to Claim 2, characterised in that the stem-shaped part (23) of the metallic element (22) consists of wires (25) which are twisted to form a cable (27).

5. A metallurgical vessel according to Claim 2, characterised in that the stem-shaped part (23) of the metallic element (22) is a metal rod (28) which is fixed to a metal plate (24) to which the metallic bristles (25) are attached.

6. A metallurgical vessel according to Claims 4 or 5, characterised in that the stem-shaped part (cable 27 or rod 28) is guided out of the vessel (10) through an opening (14) in the metal casing (11).

7. A metallurgical vessel according to Claim 6, characterised in that an insulation means (13) which does not conduct the electric current is provided at the opening (14).

8. A metallurgical vessel according to Claims 4 or 5, characterised in that the stem-shaped part (cable 27 or rod 28) is guided to the mouth of the vessel in the interior of the metallic vessel (10) between the refractory lining (12) and the metal casing (11).

9. A metallurgical vessel according to Claim 8, characterised in that an insulation means (13) which does not conduct the electric current is provided between the stem-shaped part (cable 27 or rod 28) and the metal casing (11).

10. A metallurgical vessel according to Claim 2, characterised in that metal chippings are provided as the metallic insertion (26).

11. A metallurgical vessel according to Claim 2, characterised in that metal powder is provided as the metallic insertion (26).

## Revendications

1. Procédé pour fabriquer un revêtement réfractaire d'un récipient métallurgique, dans lequel, dans la zone du fond du récipient, est prévue une anode d'un dispositif à arc électrique à courant continu,
caractérisé en ce que, dans le récipient de four dépourvu de matière réfractaire, il est agencé, à un emplacement prédéterminé, un élément métallique du type balai dont les soies sont orientées vers l'intérieur du récipient, en ce que, ensuite, au moins dans la zone de l'élément en forme de balai, de la gunite réfractaire est appliquée, à laquelle est ajoutée une masse métallique pendant le gunitage, et en ce que, lorsque l'épaisseur de la gunite croît, la proportion de la masse métallique par rapport à la masse réfractaire est réduite et il est pulvérisé de la gunite exclusivement dans la zone du bord interne de la poche de coulée.

2. Récipient métallurgique pour un dispositif à arc électrique à courant continu, qui présente une cathode pénétrant dans le récipient et au moins une anode agencée dans le revêtement réfractaire du récipient et réalisée selon le procédé de la revendication 1,
caractérisé en ce que, dans le revêtement réfractaire (12), il est agencé, sur le côté associé à l'enveloppe (11) du récipient, un élément métallique du type balai (22), dont la partie (23) en forme de manche est raccordée au pôle positif de l'installation d'énergie électrique et dont les soies (25) sont noyées, en étant orientées vers l'espace interne du récipient, dans le revêtement réfractaire (11), le revêtement réfractaire (11) présentant une inclusion métallique (26) dont la proportion volumique du métal par rapport à la matière réfractaire est plus petite dans la partie en regard de l'espace interne du récipient.

3. Récipient métallurgique selon la revendication 2, caractérisé en ce que le rapport pondéral du métal (26) à la matière réfractaire (12) vaut en moyenne 20 à 80%.

4. Récipient métallurgique selon la revendication 2, caractérisé en ce que la partie (23) en forme de manche de l'élément métallique (22) est constituée de fils (25) qui sont torsadés en un câble (27).

5. Récipient métallurgique selon la revendication 2, caractérisé en ce que la partie (23) en forme de manche de l'élément métallique (22) est une barre métallique (28) qui est fixée à une plaque métallique (24) sur laquelle sont appliquées les soies métalliques (25).

6. Récipient métallurgique selon les revendications 4 ou 5, caractérisé en ce que la partie en forme de manche (câble 27 ou barre 28) est retirée du récipient (10) par une ouverture (14) dans l'enveloppe métallique (11).

7. Récipient métallurgique selon la revendication 6, caractérisé en ce qu'une isolation (13) ne conduisant par le courant électrique est prévue sur l'ouverture (14).

8. Récipient métallurgique selon les revendications 4 ou 5, caractérisé en ce que la partie en forme de manche (câble 27 ou barre 28) est guidée vers l'embouchure du récipient à l'intérieur du récipient métallurgique (10) entre le revêtement réfractaire (12) et l'enveloppe métallique (11).

9. Récipient métallurgique selon la revendication 8, caractérisé en ce que, entre la partie en forme de manche (câble 27 ou barre 28) et l'enveloppe métallique (11), il est prévu une isolation (13) ne conduisant pas le courant électrique.

10. Récipient métallurgique selon la revendication 2, caractérisé en ce que des copeaux métalliques sont prévus comme inclusion métallique (26).

11. Récipient métallurgique selon la revendication 2, caractérisé en ce que de la poudre métallique est prévue comme inclusion métallique (26).
